# FASCICULE DE BREVET EUROPEEN

(11) **EP 0 849 554 B1**
(45) Date de publication et mention de la délivrance du brevet: **23.07.2003**
(21) Numéro de dépôt: 97401928.3
(22) Date de dépôt: 13.08.1997
(51) Int. Cl.: F25D 29/00, G05B 23/02, B67C 3/22

(54) **Installation de traitement de produits alimentaires commandée en fonction de paramètres de consigne**
Sollwertgesteuerte Vorrichtung zum Behandeln von Lebensmitteln
Apparatus for treating food products, controlled as a function of set points

(30) Priorité: 21.11.1996 FR 9614234
(43) Date de publication de la demande: 24.06.1998
(73) Titulaire: L'air Liquide, S.A. à Directoire et Conseil de Surveillance pour l'Etude et l'Exploitation des Procédés Georges Claude, 75321 Paris Cedex 07 (FR)
(72) Inventeur: Viard, Nicolas, 78530 Buc (FR); Gammal, Boris, 92190 Meudon (FR); Germain, Jean-Pierre, 78180 Montigny Le Bretonneux (FR); Fraysse, Sylvie, 92260 Fontenay aux Roses (FR)
(74) Mandataire: Vesin, Jacques

(56) Documents cités:
- EP-A- 0 221 618
- EP-A- 0 667 503
- EP-A- 0 723 928
- US-A- 4 847 894
- US-A- 4 891 952
- US-A- 5 311 451
- US-A- 5 460 006

## Description

La présente invention concerne une installation de traitement de produits alimentaires, du type comportant un appareil de traitement de produits alimentaires muni de moyens de réglage de paramètres de consigne pour le fonctionnement de cet appareil et de moyens de commande du fonctionnement de l'appareil en fonction de ces paramètres de consigne.

Les appareils de traitement de produits alimentaires utilisés dans de telles installations sont par exemple des appareils frigorifiques tels que des tunnels cryogéniques de congélation ou des tunnels de croûtage. Ces installations peuvent également mettre en oeuvre des fours de cuisson ou des appareils de distribution de quantités calibrées (gouttes) d'azote liquide dans des bouteilles en matière plastique souple avant bouchage, ou encore dans des canettes (« cans ») en aluminium.

Un exemple de tunnel cryogénique pour le traitement de produits alimentaires est décrit dans la demande de brevet espagnol P9500983 déposée le 23 mai 1995 au nom de SOCIEDAD ESPANOLA DEL OXIGENO, S.A..

Les moyens de commande du fonctionnement de tels appareils en fonction des paramètres de consigne prédéterminés peuvent être plus ou moins sophistiqués. En particulier, ces appareils peuvent comporter une ou plusieurs boucles de régulation agissant sur au moins l'un des paramètres de consigne.

Dans ces conditions, la complexité des appareils de traitement de produits alimentaires peut conduire à un fonctionnement imparfait de ceux-ci. En particulier, les modifications des conditions courantes d'utilisation des appareils, par exemple par variation du taux de charge de ceux-ci ou encore de la température extérieure, peuvent provoquer un fonctionnement dégradé, en particulier par une dérive des réglages.

Aussi, on constate en pratique que de telles installations mettant en oeuvre des moyens sophistiqués de commande et de régulation présentent des risques importants de dysfonctionnements et d'instabilité, qui peuvent conduire finalement au fait que les performances observées sont inférieures à celles d'appareils de conception plus simple.

Sur une plus ou moins longue période d'utilisation, l'exploitant d'un tel appareil ne tire pas avantage des performances théoriques élevées de l'appareil qu'il a acquis, du fait des nombreuses périodes de dysfonctionnement de celui-ci.

Ces dysfonctionnements ont bien entendu des implications économiques liées notamment à des instabilités sur la qualité des produits obtenus, ou encore à la consommation erratique de certains consommables tels l'azote liquide utilisé pour réfrigérer les produits alimentaires.

Dans ce domaine particulier du traitement des produits alimentaires, les dysfonctionnements d'un appareil de traitement ont en effet de graves conséquences quant à la qualité des produits traités. Ainsi, les produits traités alors que l'appareil fonctionne de manière non satisfaisante risquent d'être impropres à la consommation et doivent être détruits, ce qui nuit gravement au rendement global de l'installation.

En conclusion, les appareils de traitement de produits alimentaires, bien que théoriquement performants en l'absence de tout élément perturbateur, ne satisfont pas les exigences des utilisateurs du fait des aléas importants de fonctionnement.

Il faut noter que le possesseur de telles installations est le plus souvent démuni face à ces problèmes, n'ayant que très rarement la maîtrise et la compréhension des phénomènes mis en jeu, et a fortiori des propositions de solutions immédiatesà apporter à ces problèmes, alors que des quantités potentiellement importantes de produits sont en souffrance, dans l'attente de pouvoir être traités dans des conditions satisfaisantes.

Plus encore, non seulement il ne possède le plus souvent pas les compétences pour diagnostiquer les dysfonctionnements d'un de ses appareils, mais encore il peut être confronté au fait de devoir affronter les dysfonctionnements simultanés de plusieurs appareils (de même type ou non) de son site.

Les travaux menés à bien par la Demanderesse sur ce sujet lui permette de fournir ici quelques illustrations de tels dysfonctionnements/dérives et de la façon dont ils peuvent sévèrement entacher le rendement de l'installation.

Prenons par exemple le cas d'un tunnel cryogénique muni d'une régulation de la température dans le tunnel, avec une mesure de température à l'intérieur de l'enceinte et éventuellement une rétroaction, selon le résultat d'une comparaison entre la mesure et une valeur de consigne de température, sur le réglage d'une vanne d'alimentation du tunnel en liquide cryogénique.

On constate en pratique des dérives de température, par exemple lors de brusques variations du taux de charge du tunnel ou encore de conditions climatiques environnantes. Ces dérives peuvent parfois être reliées à un dysfonctionnement de la vanne d'alimentation en liquide cryogénique, dont la courbe d'ouverture/fermeture dans le temps n'arrive pas à accommoder le régime qui serait nécessaire à maintenir la température requise dans le tunnel (par exemple ouverture/fermeture très rapprochées de la vanne mettant gravement en cause sa fiabilité future).

S'en tenir dans un tel cas à une simple mesure de la température n'est alors pas parfaitement représentatif du fonctionnement réel de l'appareil. Comme développé plus loin dans le cadre de la présente demande il est avantageux d'effectuer un relevé d'informations complémentaires représentatives elles, du fonctionnement réel de l'appareil, afin d'être effectivement en position de détecter et comprendre d'éventuels dysfonctionnements et dérives de l'appareil.

On pourra par exemple se reporter au document US-5 460 006, qui illustre cet art antérieur de la régulation en température.

La présente invention a pour but d'apporter une solution aux problèmes mentionnés ci-dessus et en particulier de proposer une installation de traitement de produits alimentaires, mettant en oeuvre un appareil de traitement qui soit fiable et puisse assurer sans risque pour la qualité des produits un rendement de production élevé.

A cet effet, l'invention a pour objet une installation de traitement de produits alimentaires du type précité, caractérisée en ce qu'elle comporte :
- des moyens de relevé d'informations relatives au fonctionnement réel de l'appareil;
- une unité de surveillance de l'appareil disposée à distance de celui-ci et adaptée pour la détection d'anomalies de fonctionnement de l'appareil; et
- des moyens de communication desdites informations relatives au fonctionnement réel de l'appareil depuis ledit appareil vers ladite unité de surveillance à distance.

Suivant des modes de réalisation particuliers, l'installation peut comporter l'une ou plusieurs des caractéristiques suivantes :
- lesdits moyens de communication desdites informations comportent des moyens de traitement desdites informations pour engendrer un message représentatif du fonctionnement réel de l'appareil, des moyens d'émission dudit message vers l'unité de surveillance à distance, laquelle unité comporte des moyens de réception dudit message et des moyens de traitement dudit message en vue de la détection des anomalies de fonctionnement ;
- lesdits moyens de commande de l'appareil comportent une boucle de régulation agissant sur au moins l'un des paramètres de consigne ;
- ladite boucle de régulation comporte un régulateur associé à des paramètres de régulation modifiables, l'unité de surveillance à distance comportant des moyens pour engendrer des paramètres de régulation modifiés pour ledit régulateur et des moyens d'émission desdits paramètres de régulation modifiés vers lesdits moyens de communication, lesquels moyens de communication comportent des moyens de réception desdits paramètres de régulation modifiés émis par ladite unité de surveillance à distance, et ladite boucle de régulation comportant des moyens de modification des paramètres de régulation en fonction desdits paramètres de régulation modifiés reçus par lesdits moyens de communication depuis ladite unité de surveillance à distance;
- elle comporte des moyens de relevé des paramètres de consigne réglés, lesquels moyens de relevé des paramètres de consigne sont reliés aux dits moyens de communication depuis ledit appareil vers ladite unité de surveillance à distance en vue de la transmission desdits paramètres de consigne relevés vers ladite unité de surveillance à distance ;
- l'unité de surveillance à distance comporte des moyens pour engendrer des paramètres de consigne modifiés et des moyens d'émission desdits paramètres de consigne modifiés vers lesdits moyens de communication, lesquels moyens de communication comportent des moyens de réception desdits paramètres de consigne modifiés émis par ladite unité de surveillance à distance, et lesdits moyens de réglage des paramètres de consigne comportent des moyens de modification des paramètres de consigne en fonction desdits paramètres de consigne modifiés reçus par lesdits moyens de communication depuis ladite unité de surveillance à distance ;
- ledit appareil est un tunnel de surgélation de type cryogénique et lesdits moyens de relevé d'informations comportent des moyens de relevé d'au moins l'une des informations parmi la température dans l'enceinte du tunnel, la quantité de fluide cryogénique consommé, la vitesse de sortie du fluide cryogénique vaporisé et l'état de fonctionnement d'au moins un organe fonctionnel du tunnel, par exemple une vanne ;
- le tunnel comporte un convoyeur de transport des produits alimentaires à traiter et lesdits moyens de relevé d'informations comportent un capteur de déplacement du convoyeur ; et
- ledit appareil est un appareil de distribution de quantités calibrées d'un liquide cryogénique, notamment de l'azote liquide, et lesdits moyens de relevé d'informations comportent des moyens de relevé de l'état de fonctionnement d'au moins un organe fonctionnel de l'appareil, par exemple une vanne.

L'invention sera mieux comprise à la lecture de la description qui va suivre, donnée uniquement à titre d'exemple et faite en se référant aux dessins sur lesquels :
- La figure 1 est une vue schématique d'une installation de congélation de produits alimentaires mettant en oeuvre un tunnel cryogénique ;
- La figure 2 est une installation de croûtage de produits alimentaires mettant en oeuvre un tunnel de croûtage cryogénique ; et
- La figure 3 est une vue schématique d'une installation de conditionnement en bouteille d'une boisson non gazeuse mettant en oeuvre un distributeur de quantités calibrées (gouttes) d'azote liquide dans chaque bouteille avant bouchage.

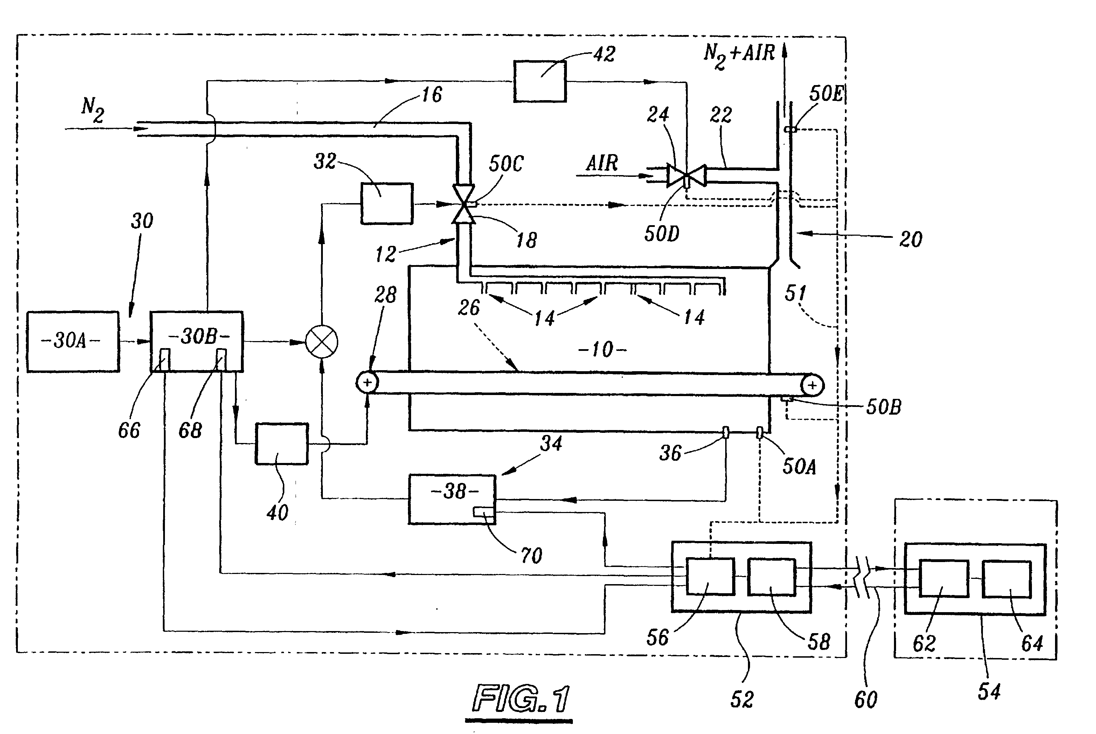

L'installation de congélation de produits alimentaires, schématisée sur la figure 1, comprend un tunnel cryogénique 10 ayant sensiblement la même structure que le tunnel cryogénique décrit dans la demande de brevet espagnol P 9500983.

Ainsi, le tunnel cryogénique 10 comporte des moyens 12 d'alimentation en fluide cryogénique liquide, de l'azote liquide par exemple. Ces moyens comportent plusieurs buses d'injection 14, alimentées par une conduite 16 d'alimentation en fluide cryogénique. Une électrovanne 18 est prévue sur la conduite 16 et permet le réglage du débit d'azote introduit dans l'enceinte du tunnel.

Une cheminée 20 assure l'évacuation du fluide cryogénique vaporisé dans l'enceinte du tunnel 10. L'entrée de cette cheminée est disposée au voisinage immédiat du tunnel. Un piquage 22 est prévu sur la cheminée en vue de l'introduction d'air ambiant dans celle-ci. Le piquage 22 porte une électrovanne 24 qui est adaptée pour le réglage du débit d'air-introduit dans la cheminée. Comme exposé dans la demande de brevet espagnol précitée, l'air ambiant introduit dans la cheminée assure un réchauffement du fluide cryogénique vaporisé et évite ainsi la congélation de la vapeur d'eau présente dans le fluide évacué, provenant ici essentiellement de l'air environnant.

On conçoit alors que le débit d'air admis dans le piquage 22 sera fonction du débit d'atmosphère évacué, de sa température et de sa teneur résiduelle en vapeur d'eau.

Par ailleurs, le tunnel cryogénique est traversé de part en part par un convoyeur à bande 26, entraîné en rotation par un moteur électrique 28 à vitesse réglable.

L'installation de congélation comporte des moyens 30 de réglage par l'utilisateur des paramètres de consigne, par exemple pour le réglage de la température à l'intérieur de l'enceinte du tunnel cryogénique et de la vitesse de défilement du convoyeur 26. Ils permettent en outre la mise en marche et l'arrêt de l'installation.

Ces moyens 30 de réglage de paramètres de consigne comportent un pupitre 30A de réglage des paramètres, relié à des moyens de pilotage 30B. Ces derniers sont reliés à divers moyens de commande de différents organes du tunnel cryogénique.

Pour le mode de réalisation représenté, les moyens de pilotage 30B sont reliés à des moyens 32 de commande de l'électrovanne 18 afin de commander le degré ainsi que le temps d'ouverture de la vanne en fonction de la température de consigne.

En outre, une boucle de régulation 34 assure une régulation automatique de la température dans l'enceinte du tunnel cryogénique. A cet effet, la boucle de régulation comporte une sonde de température 36 disposée à l'intérieur de l'enceinte du tunnel cryogénique. Cette sonde est reliée à un régulateur en boucle fermée 38 agissant sur les moyens de commande 32 afin de maintenir la température dans le tunnel sensiblement égale à la température de consigne.

Les moyens de pilotage 30B peuvent en outre être reliés à des moyens 40 de commande de la vitesse du moteur 28 en fonction de la vitesse de consigne définie sur le pupitre 30A de réglage des paramètres de consigne.

En outre, l'installation comporte des moyens 42 de commande de l'électrovanne 24 d'arrivée d'air dans le piquage 22. Ces moyens de commande sont reliés aux moyens de pilotage 30B, afin de commander le degré d'ouverture et le temps d'ouverture de l'électrovanne 24 en fonction de la température de consigne. A cet effet, les moyens de pilotage 30B déterminent le débit de fluide cryogénique envoyé dans l'enceinte du tunnel cryogénique et, comme indiqué dans la demande de brevet espagnol précitée, calculent le degré et le temps d'ouverture nécessaires pour l'électrovanne 24 en fonction du débit de fluide cryogénique introduit.

Par ailleurs, l'installation comporte des moyens de relevé d'informations relatives au fonctionnement réel de l'appareil. Ces moyens portent la référence générale 50 suivie sur les dessins d'une lettre propre à chaque élément de relevé.

Dans l'exemple représenté sur la figure 1, les moyens de relevé comportent une sonde de température 50A mesurant la température dans l'enceinte du tunnel cryogénique, un capteur 50B de déplacement du convoyeur 26, des capteurs 50C, 50D de mesure de l'ouverture respectivement des électrovannes 18 et 24 ainsi qu'un capteur 50E de mesure de la vitesse de circulation des gaz dans la cheminée 20.

Tous ces moyens de relevé d'informations sont reliés par une liaison 51 représentée en pointillés sur la figure 1 à des moyens de communication 52. Ces moyens de communication sont associés au tunnel cryogénique et sont adaptés pour assurer la communication entre le tunnel cryogénique et une unité de surveillance 54 déportée.

Cette unité de surveillance, bien que constituant un élément de l'installation selon l'invention, est prévue à distance du tunnel cryogénique. Elle est installée par exemple dans une salle de contrôle d'une usine regroupant plusieurs unités de surveillance associées à des appareils distincts d'installations analogues, ou encore dans les locaux d'une société assurant la maintenance et le suivi du tunnel cryogénique 10.

Les moyens de communication 52 comportent des moyens de traitement d'informations 56 reliés aux moyens 50 de relevé d'informations. Ces moyens de traitement sont adaptés pour engendrer un message représentatif du fonctionnement réel de l'appareil à partir des informations relevées par les moyens 50.

Les moyens de communication 52 comportent en outre, reliés en sortie des moyens de traitement 56, des moyens 58 d'émission et de réception vers et depuis l'unité de surveillance 54. Ces moyens d'émission et de réception comprennent des moyens de couplage à une ligne de transmission de données 60, formée par exemple par une ligne téléphonique, ou un réseau local de transmission d'informations.

L'unité de surveillance 54 comporte, de manière analogue, des moyens 62 d'émission et de réception d'informations vers et depuis les moyens de communication 52 associés au tunnel. Ces moyens 62 comprennent des moyens de couplage à la ligne de transmission de données 60.

L'unité de surveillance 54 comporte en outre des moyens de traitement d'informations 64 reliés aux moyens 62 de réception et d'émission. Ces moyens de traitement 64 sont adaptés pour le traitement du message représentatif du fonctionnement réel de l'appareil engendré par les moyens de traitement 56 et transmis par les moyens complémentaires 58, 62, via la ligne 60.

Ces moyens de traitement 64 comportent des moyens d'analyse du message représentatif du fonctionnement réel de l'appareil, en vue par exemple de l'analyse de la température relevée dans l'enceinte par le capteur 50A, de l'état de défilement du convoyeur 26, de l'état d'ouverture des vannes 18 et 24 ou encore de la vitesse de circulation des gaz dans la cheminée 20.

Les moyens d'analyse sont adaptés pour la détection des anomalies de fonctionnement de l'appareil, notamment par comparaison des valeurs relevées par les moyens 50 avec des valeurs de référence.

Les moyens de traitement 64 peuvent être reliés à des moyens de présentation d'informations, tels qu'un écran de visualisation et/ou une imprimante en vue de la mise à disposition d'informations sur le fonctionnement de l'appareil et de messages d'anomalie.

Les moyens de traitement 64 peuvent également être reliés à des moyens d'envoi d'un signal d'urgence à un opérateur de maintenance. Ces derniers comportent par exemple un modem susceptible d'adresser le signal d'urgence sur un téléphone portable que l'opérateur de maintenance conserve sur lui.

Par ailleurs, l'installation comporte des moyens 66 de relevé des paramètres de consigne réglés par l'utilisateur. Ces moyens 66 sont disposés dans les moyens de pilotage 30B et sont reliés aux moyens 56 de traitement d'informations des moyens de communication 52. Ces derniers permettent notamment la transmission vers l'unité de surveillance 54 des paramètres de consigne définis sur le pupitre de réglage 30A.

Les moyens de traitement 64 de l'unité de surveillance comportent pour leur part des moyens de détermination de paramètres de consigne modifiés. Les moyens de pilotage 30B comportent des moyens 68 de modification des paramètres de consigne en fonction des paramètres de consigne modifiés engendrés et émis depuis l'unité de surveillance 54 vers le tunnel cryogénique. A cet effet, les moyens de modification de paramètres de consigne sont reliés aux moyens de traitement 56 des moyens de communication 52 associés au tunnel cryogénique.

De même, les moyens de traitement 64 de l'unité de surveillance comportent des moyens pour engendrer des paramètres de régulation modifiés.

Le régulateur 38 comporte des moyens 70 de modification des paramètres de régulation, reliés aux moyens 56 de traitement afin de modifier les paramètres du régulateur en fonction des paramètres de régulation modifiés engendrés et transmis depuis l'unité de surveillance 54.

Un exemple de fonctionnement de l'installation va maintenant être décrit.

L'utilisateur du tunnel cryogénique fixe les paramètres de consigne de fonctionnement du tunnel depuis le pupitre 30A de réglage des paramètres disposé à proximité du tunnel. En particulier, il détermine, en fonction des produits à congeler et du taux de productivité qu'il souhaite atteindre, la température à l'intérieur de l'enceinte du tunnel cryogénique et la vitesse de défilement du convoyeur 26. A partir de ces paramètres de consigne, les moyens de pilotage 30B assurent le pilotage de tout ou partie des moyens de commande 32, 40, 42, afin que ceux-ci commandent respectivement l'électrovanne 18, le moteur 28 et l'électrovanne 24 en fonction d'algorithmes qui ne seront pas décrits en détail ici.

Au cours du fonctionnement de l'installation, la boucle de régulation 34 assure une régulation de la température à l'intérieur du tunnel cryogénique.

De plus, selon l'invention, pendant le fonctionnement de l'installation, par exemple à intervalles de temps réguliers ou définis, des informations relatives au fonctionnement réel de l'appareil, parmi 50A à 50E, sont relevées et transmises à l'unité de surveillance 54. De même, les paramètres de consigne imposés par l'utilisateur du tunnel sont relevés par les moyens 66 de relevé des paramètres de consigne et sont transmis à l'unité de surveillance 54.

Les moyens de traitement 64 déterminent à partir des moyens d'analyse qu'ils comportent si le fonctionnement du tunnel est normal ou non. Si une anomalie de fonctionnement est détectée par l'analyse des informations relevées sur le tunnel cryogénique, les moyens de traitement 64 déterminent la mesure devant être prise.

A titre illustratif, la détection d'anomalies peut s'effectuer par un suivi dans le temps (courbe d'évolution) des informations relevées par le capteur 50C, donnant la fréquence et la durée d'ouverture de la vanne 18.

Toujours à titre d'exemple, les moyens d'analyse peuvent comparer la quantité de fluide cryogénique consommé dans le tunnel à une valeur de consommation prévue initialement lors de la cotation de l'installation. A cet effet, un compteur non représenté est disposé par exemple sur la conduite 16. Il est relié aux moyens de communication 52 en vue de la transmission vers l'unité de suivi 54 de la quantité de fluide cryogénique consommé.

Au cours du contrôle des anomalies, si par exemple la température relevée par la sonde 50A à l'intérieur de l'enceinte est très différente de la température de consigne, les moyens de traitement 64 engendrent des paramètres de régulation modifiés et envoient ceux-ci vers le régulateur 38, afin de modifier les paramètres de régulation mis en oeuvre. Le régulateur est ainsi modifié de façon à permettre un suivi effectif de la température de consigne.

Toujours à titre d'exemple, si la courbe d'ouverture/fermeture de la vanne 18 avec le temps, telle que reconstituée par l'unité 54 est erratique, l'unité pourra prendre plusieurs types de mesures (selon le site considéré, les produits traités etc..) allant de l'émission vers le site utilisateur d'un message d'alerte (sonore, visuel, textuel sur une console..), le déclenchement du déplacement d'un opérateur de maintenance auprès du tunnel cryogénique en vue de procéder à des opérations de maintenance ou de réparation, ou encore engendrera des paramètres de consigne de fonctionnement de la vanne 18 modifiés (par exemple plus représentatif du taux de charge brutalement modifié du tunnel), paramètres modifiés qui sont envoyés vers les moyens de communication 52 du tunnel, ou bien encore, toujours à titre illustratif, une action volontariste d'arrêter l'approvisionnement du tunnel en produits à traiter.

Dans certaines conditions, un opérateur présent auprès de l'unité de surveillance peut donc, suite à l'analyse du fonctionnement réel du tunnel cryogénique, modifier un ou plusieurs des paramètres de consigne de celui-ci. A cet effet, les moyens de traitement 64 engendrent, comme rappelé ci-dessus, sous la commande de l'opérateur, des paramètres de consigne modifiés qui sont envoyés via la ligne de transmission 60 vers les moyens de communication 52 du tunnel cryogénique. Les moyens de traitement 56 pilotent alors les moyens 68 de modification des paramètres de consigne en vue de leur modification.

On comprend que selon le cas considéré, tout type d'informations relatives au fonctionnement réel du tunnel cryogénique peut être suivi et donc compris et diagnostiqué à distance depuis l'unité de surveillance. Ainsi, il est possible de détecter une anomalie de fonctionnement du tunnel cryogénique très rapidement (ou encore de plusieurs anomalies simultanées sur plusieurs appareils) avant que cette anomalie de fonctionnement puisse être préjudiciable aux produits alimentaires traités par le tunnel ou au tunnel lui-même (par exemple à la durée de vie d'une vanne).

Et l'on conçoit que des dysfonctionnements très divers peuvent ainsi être détectés et diagnostiqués, dont ont donnera ci-après quelques exemples complétant ceux déjà cités :
- une dérive de température;
- un blocage du tapis;
- un bouchage de la cheminée;
- une dérive de la fréquence et durée d'ouverture des vannes 18 et 24 (signe par exemple que la vanne 18 ne peut tenir la consigne de fréquence d'ouverture que lui ont imposé les moyens de commande 30B);

On notera par ailleurs qu'il est possible à partir de l'unité de surveillance à distance de procéder à des opérations de facturation ou de gestion de la production du tunnel cryogénique, dans la mesure où les informations transmises depuis le tunnel cryogénique vers l'unité de surveillance peuvent comporter des indications quantitatives concernant par exemple la quantité de produits traités par le tunnel ou la quantité de fluide cryogénique consommée.

D'autres informations peuvent être relevées sur le tunnel, transmises à l'unité de surveillance et stockées à des fins notamment d'analyse statistique. Il s'agit par exemple de la durée de fonctionnement réel du tunnel, de la durée de ses arrêts volontaires et de la durée de ses arrêts provoqués par une panne.

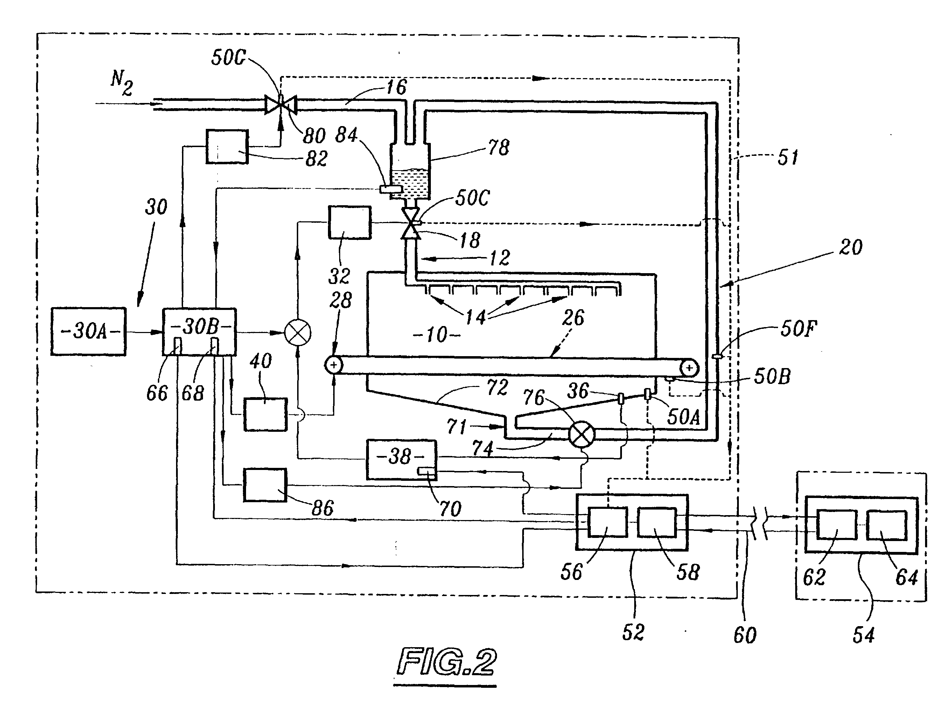

Sur la figure 2 est représentée une installation de croûtage de produits. Cette installation est sensiblement analogue à celle représentée sur la figure 1. Aussi, les éléments identiques ou analogues à ceux de la figure 1 portent les mêmes références.

Pour des raisons de simplicité de lecture de la figure, la cheminée 20 et tout son environnement de commande associés ont été supprimés, pour permettre de mieux représenter et visualiser d'autres éléments spécifiques de cette installation de croutage, qui ont eux été ajoutés.

Les algorithmes de régulation et d'alimentation du tunnel en fluide cryogénique sont ici différents, celui-ci ayant pour seule fonction de congeler superficiellement les produits alimentaires introduits. Ces algorithmes pouvant être de tout type connu adapté ne seront pas décrits ici en détail.

En particulier, des moyens 71 de récupération de l'excédent de fluide cryogénique liquide sont prévus dans la partie basse de l'enceinte du tunnel cryogénique. A ce effet, le fond 72 du tunnel présente une forme d'entonnoir convergeant vers une conduite 74 de récupération du liquide cryogénique en excès. Une pompe 76 est prévue sur cette conduite 74 afin d'envoyer le liquide cryogénique en excès vers un réservoir tampon 78 disposé sur la conduite 16 en amont de l'électrovanne 18. Une électrovanne 80, reliée aux moyens de pilotage 30B via des moyens de commande 82 adaptés pour commander l'ouverture de l'électrovanne, est disposée sur la conduite 16 en amont du réservoir tampon 78. En outre, un capteur de niveau bas 84 est intégré dans le réservoir tampon 78. Ce capteur est relié aux moyens de pilotage 30B afin de commander l'ouverture de l'électrovanne 80 lorsque le niveau dans le réservoir tampon 78 est inférieur à un niveau prédéterminé.

Par ailleurs, la pompe 76 est reliée aux moyens de pilotage 30B via des moyens 86 de commande de la pompe.

Dans ce mode de réalisation, un capteur 50F de détection d'écoulement dans la conduite 74 est prévu en aval de la pompe 76. De même, un capteur 50G est associé à l'électrovanne 80 afin de vérifier son fonctionnement correct. Comme précédemment, les capteurs 50F et 50G sont reliés aux moyens de traitement d'informations 56 en vue de la transmission d'un message représentatif de l'état de fonctionnement réel du tunnel de croûtage vers l'unité de surveillance 54.

Comme dans le mode de réalisation précédent, le fonctionnement réel du tunnel de croûtage peut ainsi être suivi à distance en vue de la mise en oeuvre rapide d'actions correctives en cas de dysfonctionnement pouvant nuire à la qualité des produits alimentaires traités et à l'intégrité de des éléments constitutifs de l'installation.

En plus des quantités suivies et éventuellement corrigées depuis l'unité de surveillance, identiques à celles de l'installation de la figure 1, l'installation décrite ici permet un suivi à distance du fonctionnement correct de la vanne d'alimentation 80 et du circuit 74 de régénération du fluide cryogénique liquide en excès.

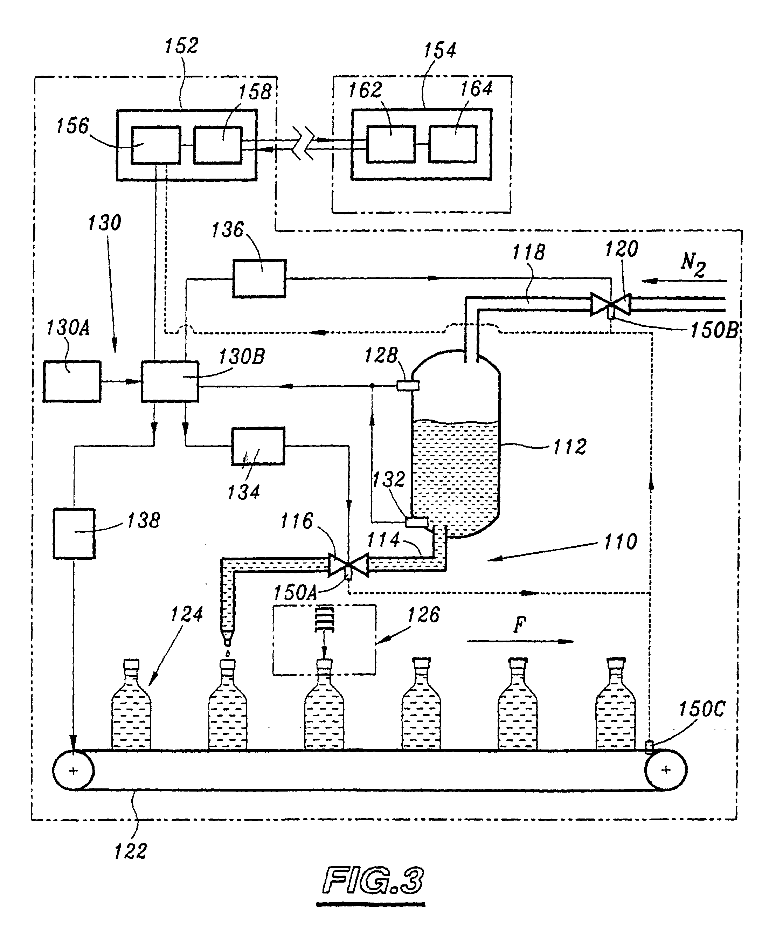

Sur la figure 3 est représenté un autre exemple d'installation de traitement de produits alimentaires mettant en oeuvre une unité de suivi à distance.

Dans cette installation, les éléments analogues à ceux des figures 1 et 2 sont désignés par les mêmes références auxquelles a été ajouté 100.

Dans ce mode de réalisation, l'appareil de traitement des produits alimentaires est formé par un distributeur 110 de gouttes d'un liquide cryogénique, ici d'azote liquide.

Ce dernier comporte un réservoir tampon 112 pour le stockage temporaire de l'azote liquide et une conduite 114 de distribution des gouttes d'azote liquide. Cette conduite 114 est munie d'une électrovanne 116 assurant la distribution séquencée de gouttes d'azote liquide.

Le réservoir 112 est alimenté par une conduite 118 reliée à un stockage d'azote liquide. Une électrovanne 120 est disposée sur la conduite 118 pour le contrôle du remplissage du réservoir tampon 112.

Le distributeur de gouttes d'azote liquide est associé à un convoyeur 122 pour le transport de bouteilles de plastique (ou autres canettes en aluminium) 124 préalablement remplies d'une boisson non gazeuse. Le convoyeur circule suivant le sens de la flèche F. Immédiatement avant la mise en place d'un bouchon dans une unité de bouchage 126, une quantité calibrée d'azote liquide est versée dans chaque bouteille, afin d'y constituer un ciel gazeux inerte mais également d'augmenter la pression dans celle-ci.

Comme dans le mode de réalisation précédent, l'installation comporte un pupitre de réglage des paramètres de consigne 130A et des moyens de pilotage 130B de l'installation. Ces moyens de pilotage sont reliés à deux capteurs 128, 132 prévus dans le réservoir tampon 112 afin de détecter respectivement un niveau haut et un niveau bas de l'azote liquide.

En outre, des moyens de commande 134, 136, 138 sont reliés aux moyens de pilotage 130B afin de commander le cas échéant respectivement les électrovannes 116, 120 et le moteur du convoyeur 122.

Les moyens de pilotage 130B sont adaptés pour déclencher l'ouverture de l'électrovanne 120 lorsqu'un niveau bas est détecté dans le réservoir 112 par le détecteur de niveau bas 132 et fermer l'électrovanne 120 lorsqu'un niveau haut est détecté dans le réservoir 112 par le détecteur de niveau haut 128.

De plus, les moyens de pilotage 130B sont adaptés pour commander l'ouverture de la vanne 116 en vue de la libération d'une quantité d'azote liquide dans chaque bouteille à une cadence synchronisée avec le passage des bouteilles 124 sous l'extrémité de distribution de la conduite 114. Aussi, la cadence d'ouverture de la vanne 116 est calculée à partir de la vitesse du convoyeur 122. Dans une telle installation, les paramètres de consigne sont par exemple une courbe d'ouverture/fermeture de la vanne 116 en fonction de la vitesse de déplacement du convoyeur.

Comme dans les modes de réalisation précédents, les moyens de pilotage 130B sont reliés à des moyens de communication 152 eux-mêmes reliés à une unité de surveillance à distance 154.

Par ailleurs, des capteurs 150A, 150B et 150C sont associés respectivement aux électrovannes 116 et 120 et au convoyeur 122 afin de vérifier le bon fonctionnement de ceux-ci. Ces capteurs sont reliés aux moyens de communication 152 afin de permettre une détection à distance des anomalies de fonctionnement de l'appareil (par exemple grâce au capteur 150A un fonctionnement erratique de la vanne 116).

D'autres capteurs peuvent être prévus sur le distributeur d'azote liquide afin de vérifier son fonctionnement correct, ou encore permettre un suivi de la production du distributeur. A cet effet, des moyens de détection du nombre de bouteilles 124 circulant sur le convoyeur 122 peuvent être mis en oeuvre. Ces moyens sont reliés aux moyens de communication 152 en vue de la transmission vers l'unité de surveillance du nombre de bouteilles remplies.

On conçoit alors au vue de l'ensemble des exemples détaillés ci-dessus, que de manière très générale, des installations de traitement de produits alimentaires comportant une unité de surveillance à distance selon l'invention, unité travaillant sur des relevés d'informations représentatives du fonctionnement réel de l'installation, permettent de mettre en oeuvre des appareils de traitement, en particulier sophistiqués et complexes, sans risque pour les produits alimentaires traités en cas de dysfonctionnement de l'appareil. En particulier, les appareils mis en oeuvre peuvent alors comporter des boucles de régulation peu élaborées.

En effet, les dysfonctionnements éventuels peuvent être détectés et compris rapidement et les mesures correctives appropriées peuvent être mises en oeuvre sans délai afin de sauvegarder la qualité des produits alimentaires traités.

Bien entendu, les informations suivies à distance depuis l'unité de surveillance peuvent également être accessibles directement auprès de l'appareil considéré, ces informations étant par exemple affichées sur un écran.

## Revendications

1. Installation de traitement de produits alimentaires, du type comportant un tunnel de surgélation (10) de type cryogénique muni de moyens (30, 130) de réglage de paramètres de consigne pour le fonctionnement de ce tunnel et de moyens (32, 38, 40, 42 ; 134, 136, 138) de commande du fonctionnement du tunnel en fonction de ces paramètres de consigne, et comportant :
- des moyens (50A, 50B, 50C, 50D, 50E ; 50F, 50G ; 150A, 150B, 150C) de relevé d'informations relatives au fonctionnement réel du tunnel;
- une unité (54 ; 154) de surveillance du tunnel disposée à distance de celui-ci et adaptée pour la détection d'anomalies de fonctionnement du tunnel; et
- des moyens (52 ; 152) de communication desdites informations relatives au fonctionnement réel du tunnel depuis le tunnel vers ladite unité (54 ; 154) de surveillance à distance ;
- l'unité (54) de surveillance à distance comportant des moyens (64) pour engendrer des paramètres de consigne modifiés et des moyens (62) d'émission desdits paramètres de consigne modifiés vers lesdits moyens de communication (52), lesquels moyens de communication (52) comportant des moyens (58) de réception desdits paramètres de consigne modifiés émis par ladite unité (54) de surveillance à distance, et lesdits moyens (30) de réglage des paramètres de consigne comportant des moyens (68) de modification des paramètres de consigne en fonction desdits paramètres de consigne modifiés reçus par lesdits moyens de communication (52) depuis ladite unité (54) de surveillance à distance.

2. Installation selon la revendication 1, **caractérisée en ce que** lesdits moyens (52 ; 152) de communication desdites informations comportent des moyens (56 ; 156) de traitement desdites informations pour engendrer un message représentatif du fonctionnement réel du tunnel, et des moyens (58 ; 158) d'émission dudit message vers l'unité (54 ; 154) de surveillance à distance, laquelle unité (54 ; 154) comporte des moyens (62 ; 162) de réception dudit message et des moyens (64 ; 164) de traitement dudit message en vue de la détection des anomalies de fonctionnement.

3. Installation selon la revendication 1 ou 2, **caractérisée en ce que** lesdits moyens de commande du tunnel comportent une boucle de régulation (34) agissant sur au moins l'un des paramètres de consigne.

4. Installation selon l'une quelconque des revendications précédentes, **caractérisée en ce qu'**elle comporte des moyens (66) de relevé des paramètres de consigne réglés, lesquels moyens de relevé des paramètres de consigne sont reliés aux dits moyens (52) de communication depuis ledit tunnel vers ladite unité (54) de surveillance à distance en vue de 1a transmission desdits paramètres de consigne relevés vers ladite unité (54) de surveillance à distance.

5. Installation selon l'une quelconque des revendications précédentes, **caractérisée en ce que** lesdits moyens de relevé d'informations (50A, 50B, 50C, 50D, 50E ; 50F, 50G) comportent des moyens de relevé d'au moins l'une des informations parmi la température dans l'enceinte du tunnel, la quantité de fluide cryogénique consommé, la vitesse de sortie du fluide cryogénique vaporisé et l'état de fonctionnement d'au moins un organe fonctionnel du tunnel, notamment une vanne (18, 24 ; 18, 80).

6. Installation selon la revendication 5, **caractérisée en ce que** lesdits moyens de relevé d'informations (50A, 50B, 50C, 50D, 50E ; 50F, 50G) comportent des moyens de relevé d'au moins deux informations parmi la température dans l'enceinte du tunnel, la quantité de fluide cryogénique consommé, la vitesse de sortie du fluide cryogénique vaporisé et l'état de fonctionnement d'au moins un organe fonctionnel du tunnel, notamment une vanne (18, 24 ; 18, 80).

7. Installation selon la revendication 5 ou 6, **caractérisée en ce que** le tunnel comporte un convoyeur de transport des produits alimentaires à traiter et **en ce que** lesdits moyens de relevé d'informations comportent un capteur (50B) de déplacement du convoyeur.

## Patentansprüche

1. Anlage zur Behandlung von Lebensmitteln jener Art, die einen kryogenen Tiefgefriertunnel (10) enthält, der mit Mitteln (30, 130) zur Einstellung von Sollwertparametern zum Betrieb dieses Tunnels und Mitteln (32, 38, 40, 42; 134, 136, 138) zur Steuerung des Betriebs des Tunnels in Abhängigkeit von diesen Sollwertparametern versehen ist, und die Folgendes umfasst:
- Mittel (50A, 50B, 50C, 50D, 50E; 50F, 50G; 150A, 150B, 150C) zur Messung von den Istbetrieb des Tunnels betreffenden Daten;
- eine Einheit (54; 154) zur Überwachung des Tunnels, die von ihm entfernt angeordnet und zur Erfassung von Anomalien des Tunnelbetriebs ausgeführt ist; und
- Mittel (52; 152) zur Kommunikation der den Istbetrieb des Tunnels betreffenden Daten vom Tunnel an die Fernüberwachungseinheit (54; 154);
- wobei die Fernüberwachungseinheit (54) Mittel (64) zur Erzeugung von geänderten Sollwertparametern und Mittel (62) zum Senden dieser geänderten Sollwerte an die Kommunikationsmittel (52) aufweist, wobei die Kommunikationsmittel (52) Mittel (58) zum Empfang der von der Fernüberwachungseinheit (54) ausgesendeten geänderten Sollwertparameter umfassen und die Mittel (30) zur Einstellung der Sollwertparameter Mittel (68) zur Änderung der Sollwertparameter als Funktion der von den Kommunikationsmitteln (52) von der Fernüberwachungseinheit (54) empfangenen geänderten Sollwertparameter umfassen.

2. Anlage nach Anspruch 1, **dadurch gekennzeichnet, dass** die Kommunikationsmittel (52; 152) Mittel (56; 156) zur Verarbeitung der Daten zur Erzeugung einer für den Istbetrieb des Tunnels repräsentativen Meldung und Mittel (58; 158) zum Senden der Meldung zur Fernüberwachungseinheit (54; 154) umfassen, wobei die Einheit (54; 154) Mittel (62; 162) zum Empfang der Meldung und Mittel (64; 164) zur Verarbeitung der Meldung zur Erfassung von Betriebsanomalien umfasst.

3. Anlage nach Anspruch 1 oder 2, **dadurch gekennzeichnet, dass** die Tunnelsteuermittel eine Regelschleife (34) umfassen, die auf mindestens einen der Sollwertparameter einwirkt.

4. Anlage nach einem der vorhergehenden Ansprüche, **dadurch gekennzeichnet, dass** sie Mittel (66) zur Messung der eingestellten Sollwertparameter umfasst, wobei die Mittel zur Messung der Sollwerte mit den Mitteln (52) zur Kommunikation vom Tunnel zur Fernüberwachungseinheit (54) verbunden sind, um die gemessenen Sollwertparameter zur Fernüberwachungseinheit (54) zu übertragen.

5. Anlage nach einem der vorhergehenden Ansprüche, **dadurch gekennzeichnet, dass** die Datenmessmittel (50A, 50B, 50C, 50D, 50E; 50F, 50G) Mittel zur Messung mindestens eines der Daten unter der Temperatur im Tunnelraum, der verbrauchten Menge an kryogenem Fluid, der Austrittsgeschwindigkeit des verdampften kryogenen Fluids und des Betriebszustands mindestens eines funktionellen Glieds des Tunnels, besonders eines Ventils (18, 24; 18, 80), umfassen.

6. Anlage nach Anspruch 5, **dadurch gekennzeichnet, dass** die Datenmessmittel (50A, 50B, 50C, 50D, 50E; 50F, 50G) Mittel zur Messung mindestens zweier Daten unter der Temperatur im Tunnelraum, der Menge an verbrauchtem kryogenen Fluid, der Ausgangsgeschwindigkeit des verdampften kryogenen Fluids und des Betriebszustands mindestens eines funktionellen Glieds des Tunnels, insbesondere eines Ventils (18, 24; 18, 80), umfassen.

7. Anlage nach Anspruch 5 oder 6, **dadurch gekennzeichnet, dass** der Tunnel eine Fördereinrichtung zum Transport der zu behandelnden Lebensmittel enthält und dass die Datenerfassungsmittel einen Weggeber (50B) der Fördereinrichtung umfassen.

## Claims

1. Food processing plant, of the type including a deep freezing tunnel (10) of the cryogenic type provided with means (30, 130) for setting setpoint parameters for the operation of this tunnel and with means (32, 38, 40, 42; 134, 136, 138) for controlling the operation of the tunnel on the basis of these setpoint parameters, and including:
- means (50A, 50B, 50C, 50D, 50E; 50F, 50G; 150A, 150B, 150C) for acquiring information relating to the actual operation of the tunnel;
- a unit (54; 154) for monitoring the tunnel, this being located remote from the latter and designed to detect anomalies in the operation of the tunnel; and
- means (52; 152) for communicating the said information relating to the actual operation of the tunnel from the said tunnel to the said remote monitoring unit (54; 154);
- the remote monitoring unit (54) including means (64) for generating modified setpoint parameters and means (62) for sending the said modified setpoint parameters to the said communication means (52), which communication means (52) include means (58) for receiving the said modified setpoint parameters sent by the said remote monitoring unit (54), and the said means (30) for setting the setpoint parameters including means (68) for modifying the setpoint parameters on the basis of the said modified setpoint parameters received by the said communication means (52) from the said remote monitoring unit (54).

2. Plant according to Claim 1, **characterized in that** the said means (52; 152) for communicating the said information include means (56; 156) for processing the said information in order to generate a message representative of the actual operation of the tunnel, and means (58; 158) for sending the said message to the remote monitoring unit (54; 154), which unit (54; 154) includes means (62; 162) for receiving the said message and means (64; 164) for processing the said message for the purpose of detecting operating anomalies.

3. Plant according to Claim 1 or 2, **characterized in that** the said means for controlling the tunnel include a control loop (34) acting on at least one of the setpoint parameters.

4. Plant according to any one of the preceding claims, **characterized in that** it includes means (66) for acquiring the setpoint parameters that have been set, which means for acquiring the setpoint parameters are linked to the said means (52) of communication from the said tunnel to the said remote monitoring unit (54) for the purpose of transmitting the said acquired setpoint parameters to the said remote monitoring unit (54).

5. Plant according to any one of the preceding claims, **characterized in that** the said information acquiring means (50A, 50B, 50C, 50D, 50E; 50F, 50G) include means for acquiring at least one of the following items of information: the temperature in the chamber of the tunnel, the quantity of cryogenic fluid consumed, the rate of outflow of vaporized cryogenic fluid and the state of operation of at least one functional device of the tunnel, in particular a valve (18, 24; 18, 80).

6. Plant according to claim 5, **characterized in that** the said information acquiring means (50A, 50B, 50C, 50D, 50E; 50F, 50G) include means for acquiring at least two of the following items of information: the temperature in the chamber of the tunnel, the quantity of cryogenic fluid consumed, the rate of outflow of vaporized cryogenic fluid and the state of operation of at least one functional device of the tunnel, in particular a valve (18, 24; 18, 80).

7. Plant according to Claim 5 or 6, **characterized in that** the tunnel includes a conveyor for transporting the food to be processed and **in that** the said information acquiring means include a sensor (50B) for detecting movement of the conveyor.
